(19)

Europäisches
Patentamt
European
Patent Office
Office européen
des brevets

(11)    EP 3 083 518 B1

(12)    **EUROPEAN PATENT SPECIFICATION**

(45) Date of publication and mention
of the grant of the patent:
**16.10.2019 Bulletin 2019/42**

(21) Application number: **14825325.5**

(22) Date of filing: **19.12.2014**

(51) Int Cl.:
*C03C 3/19* (2006.01)        *C03C 4/00* (2006.01)
*C03C 12/00* (2006.01)

(86) International application number:
**PCT/EP2014/078762**

(87) International publication number:
**WO 2015/091960 (25.06.2015 Gazette 2015/25)**

(54) **ANTIBACTERIAL GLASS**

ANTIBAKTERIELLES GLAS

VERRE ANTIBACTÉRIEN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.12.2013 EP 13382531**

(43) Date of publication of application:
**26.10.2016 Bulletin 2016/43**

(73) Proprietor: **Laboratorios Argenol, S.L.
50011 Zaragoza (ES)**

(72) Inventors:
• **MENENDEZ MEDINA, José Javier
E-46980 Paterna - Valencia (ES)**

• **FERNÁNDEZ SAIZ, Patricia
E-46980 Paterna - Valencia (ES)**
• **SANZ GUZMÁN, José
E-46980 Paterna - Valencia (ES)**
• **MUÑOZ BELTRÁN, David
E-46980 Paterna - Valencia (ES)**

(74) Representative: **ABG Intellectual Property Law,
S.L.
Avenida de Burgos, 16D
Edificio Euromor
28036 Madrid (ES)**

(56) References cited:
**DE-A1- 10 214 273        US-A1- 2001 006 987
US-A1- 2006 172 877        US-B1- 6 831 028**

Printed by Jouve, 75001 PARIS (FR)

**Description**

**FIELD OF THE INVENTION**

The present invention relates to an antibacterial property imparting glass, a method for its manufacture and an antibacterial composite material using thereof.

**BACKGROUND OF THE INVENTION**

Antibacterial resin products using an inorganic antibacterial agent, for example, silver-carrying zirconium phosphate, silver zeolite, a soluble glass and the like have been described in the literature (see JP 8026955A, JP 60178810 A; JP 2000247822 A, JP 4270208 A and EP 1452496 A).
Soluble glasses containing a silver, copper or zinc compound having antibacterial property are known as a glass which can dissolve out the above silver, copper or zinc ion at the predetermined rate for a few hours to a few years. Dissolved out silver, copper and zinc ions are adsorbed on a cell membrane of bacteria or microorganism, or concentrated in the cells, which inhibits the growth of bacteria or microorganism.
The antimicrobial effects of phosphates with Ag, Cu, Zn, Sn, Hg, Pb, Fe, Co, As, Sb, Bi, Ba, Cd, Cr, are described in JP 5155733 A.
From a composition standpoint water-soluble glasses may be classified in various families such as borosilicate glasses, phosphate glasses and the like. Phosphate-based glasses are a unique class of materials in that they are completely degradable. Furthermore, the degradation of phosphate-based glasses can be tailored to suit the end application and the rate at which they hydrolyse can vary quite considerably from minutes, months or even years. The rate of dissolution is controlled largely by the addition of glass modifiers such as calcium oxide. In simple terms, the greater the concentration of the modifier the slower is the rate of dissolution.
ISO 22196 specifies a method of evaluating the antibacterial activity of antibacterial-treated plastics, and other non-porous, surfaces of products (including intermediate products).The method tests for both bacteriostatic (growth-inhibiting) and bactericidal (bacteria-killing) properties. The value of the antibacterial activity can be used to characterize the effectiveness of an antibacterial agent. The antibacterial-activity values used to define the effectiveness shall be agreed upon by all interested parties.
Antibacterial glasses known in the art for use as preservative and bacteriostatic agents in the manufacture of resin, polymer, plastic, paint and latex materials, do not show acceptable antimicrobial properties. The possible solution of increasing the amount of silver would increase the cost of the glass and the risk of glass darkening. The solution of increasing the solubility of antibacterial glasses by adding $K_2O$, $Na_2O$ and/or $Li_2O$ has been reported to decrease the sustained antibacterial effect of the glass and to produce a problem of discoloration i.e. glass darkening, associated with the presence of silver, thereby negatively impacting on the external appearance of the final product (EP1452496B1). The colour problem has been traditionally solved by the addition of ions such as Ti, Ce, Fe, W, Bi, Mo or Nb to prevent the reduction of $Ag^+$ to $Ag^0$ (US 2005/0233888).
Therefore, one object of the present invention is to provide improved antibacterial glasses as they are still needed for its use in the manufacture of polymer, plastic, paints and latex materials.
Moreover, the known antibacterial glass has to be obtained at high temperatures. EP1116700 A1 describes an antibacterial property imparting glass which is processed at 1300-1350 °C. WO 03/082358 describes a process at temperatures around 1400 °C-1550 °C. EP1452496 describes processes at temperatures around 1250-1350 °C.
Thus, a further object of the present invention is to provide an antibacterial property imparting glass which can be processed at lower temperatures than the ones known in the art.

**SUMMARY OF THE INVENTION**

The inventors have found a particular antibacterial property imparting glass that improves the antibacterial properties of the known sustained-release antibacterial glasses for use in the manufacture of polymer, plastic, paints and latex materials by increasing the solubility of the glass and therefore exerting the antibacterial effect from time zero. Besides, the glass of the invention does not present the discoloration problem and can be processed at temperatures below 1000 °C. This melting temperature feature permits to perform the process for the obtention of the antibacterial glasses at temperatures in the range of 700-1000 °C and therefore decreases the costs of manufacture.
Therefore, one aspect of the present invention relates to a glass comprising:

45-65 % by weight of $P_2O_5$,

19-28 % by weight of $Na_2O$,

3-25% by weight of CaO,

1-4 % by weight of $B_2O_3$,

2-10 % by weight of ZnO, and

0.5-3.0% by weight of $Ag_2O$.

Another aspect relates to a process for manufacturing the antibacterial property imparting glass of the invention comprising the steps of:

a) mixing compounds capable of forming upon melting one or more of $P_2O_5$, $Na_2O$, CaO, $B_2O_3$, ZnO, $Ag_2O$,

b) melting the compound mixture of step a) until the mixture is in liquid form at temperatures between 700 and 1000 °C, and

c) cooling down the melt until it solidifies.

Another aspect relates to the use of the above glass as antibacterial property imparting glass.
Another aspect relates to the use of the glass of the invention in the manufacture of a polymer, plastic, paint or latex material.
A further aspect relates to a polymer, plastic, paint or latex material comprising the glass of the invention.

## BRIEF DESCRIPTION OF THE FIGURES

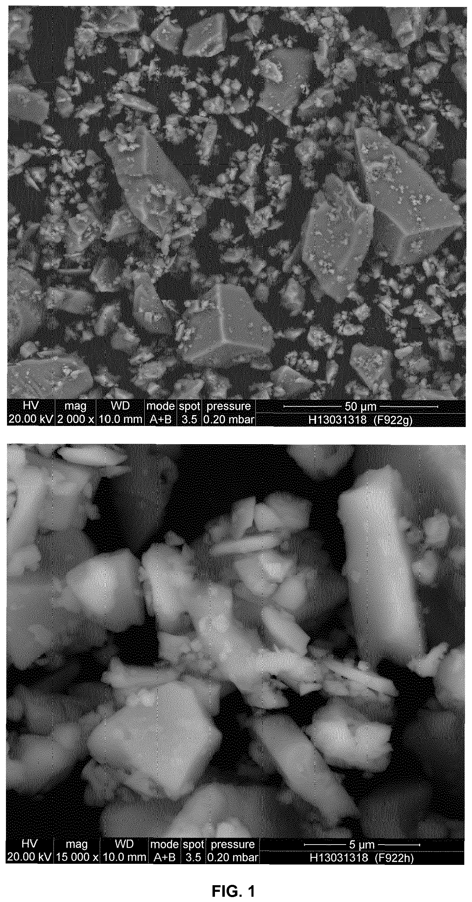

Figure 1. Micrographs of glass 1

Figure 2. Micrograph of glass 2

Figure 3. Final bacterial counts of *S.aureus* after 24 h of incubation at 37°C

Figure 4. Final bacterial counts of *E.coli* after 24 h of incubation at 37°C

Figure 5. XPS analysis of sample Glass I in the range corresponding to Ag

Figure 6. XPS analysis of sample Comparative Example 2 in the range corresponding to Ag

Figure 7. Picture of glass 1

Figure 8. Picture of comparative sample glass 2

## DETAILED DESCRIPTION OF THE INVENTION

Glass

The glass comprising 45-65 % by weight of $P_2O_5$, 19-28 % by weight of $Na_2O$, 3-25% by weight of CaO, 1-4 % by weight of $B_2O_3$, 2-10 % by weight of ZnO, and 0.5-3.0% by weight of $Ag_2O$ is generally a soluble glass and the Ag component contained in the glass (also referred herein as "soluble glass" or "glass") is dissolved out from the glass for imparting an antibacterial effect for an arbitrary period of time and, whereby, it becomes possible to impart high antibacterial property to a subject material such as a resin, polymer, plastic, paint or latex material and the like to which antibacterial property should be imparted due to the Ag component. Therefore, the glass can be referred to as "antibacterial property imparting glass".
CaO is contained in an amount of 3-25% by weight, preferably in an amount of 4-20%, preferably in an amount of 5-15%, more preferably in an amount of 5-10%.
ZnO is contained at an amount of 2-10% by weight, preferably in an amount of 3-9%, preferably in an amount of 4-8%.

$P_2O_5$ is a main component for glass formation in a glass (soluble glass). In one embodiment the content of $P_2O_5$ is preferably 51-60 % by weight, more preferably 52-59% by weight.

The content of $B_2O_3$ is preferably 1-4% by weight, more preferably 2-3.5% by weight.

$Ag_2O$ is contained in the above glass at an amount of 0.1-3.0% by weight and this $Ag_2O$ component is a main component for manifesting the antibacterial action. The content of $Ag_2O$ in a glass is preferably 0.3-2.5% by weight, more preferably 0.5-2.0% by weight.

$Na_2O$ can be contained in a range of 19-28% by weight or less. In a preferred embodiment $Na_2O$ is contained at an amount of 19-28% by weight in the glass, preferably at an amount of 21-27%, more preferably about 25% by weight.

In one embodiment, $K_2O$ may also be present. In one embodiment the glass comprises less than 0.5% by weight of $K_2O$.

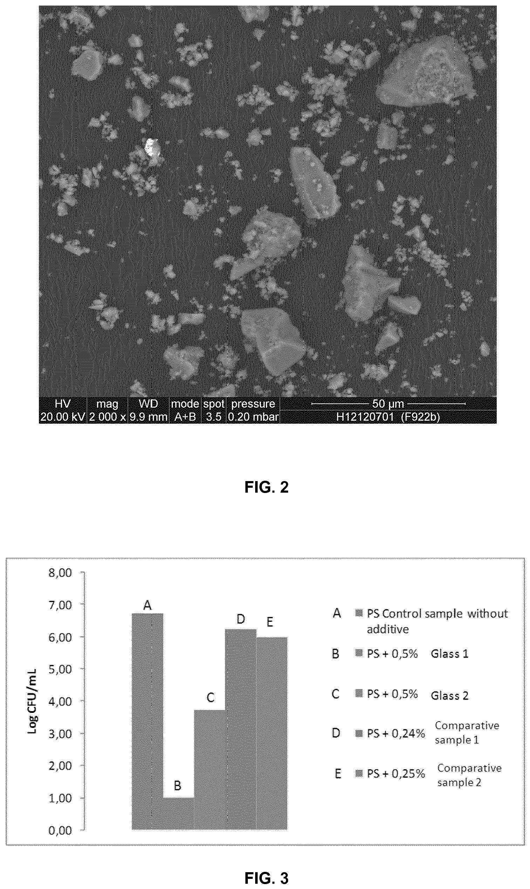

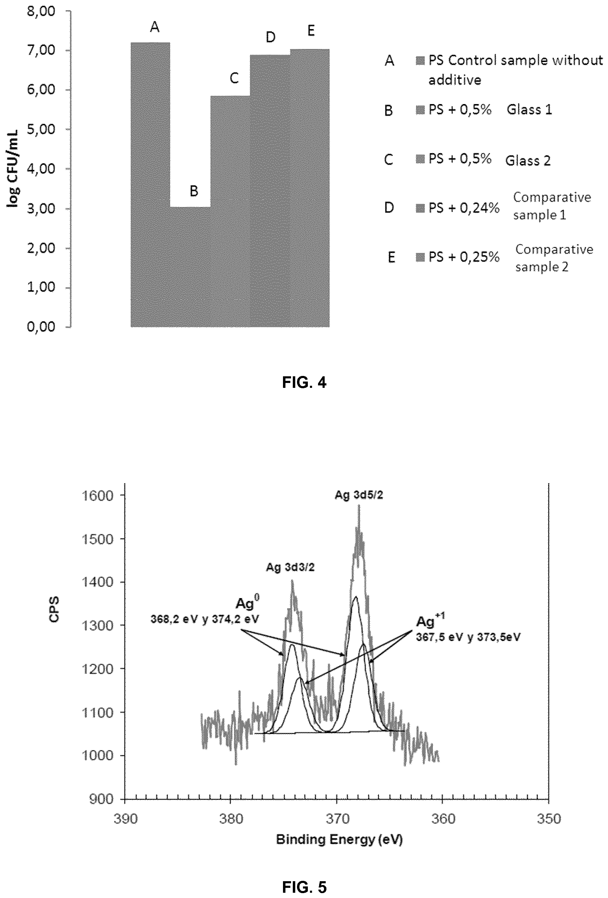

A further developed embodiment of the invention provides the introduction of $TiO_2$, as a stabilizer agent. The presence of this compound does not increase the antimicrobial capacity of the product, and therefore, it could not be considered as an active ingredient of the system. The particular role of titanium in the structure is to compete with silver for the photoelectron absorption. As a result, the photochemical reduction of silver (from $Ag^+$ to $Ag^0$) and the subsequent coloration of the product are avoided. Therefore, in a preferred embodiment $TiO_2$ is further contained in the glass at an amount of 0-5% by weight in the glass, preferably at an amount of 1-4%, preferably at an amount of 2-4%, more preferably at an amount of 3-4%. Example 1 shows two glasses of the present invention containing different amounts of $TiO_2$. Example 5 shows that the addition of $TiO_2$ improves the stability of Glass 2. However, the results of Example 2, figures 3 and 4, show a decrease of the antibacterial effect of Glass 2, therefore, in a more preferred embodiment, the glass of the invention does not comprise $TiO_2$, or is present in an amount less than 1%, preferably less than 0.5%, more preferably less than 0.1%, as $TiO_2$ seems to decrease the antimicrobial capacity of the product.

In a further embodiment other oxides may be present in the glass as contaminants or impurities. Non-limitative examples of oxides that may be present in the glass are $K_2O$, $SiO_2$, $Fe_2O_3$, $ZrO_2$, $PbO$, $HfO_2$, $SrO$ or $MnO$. In a preferred embodiment each of the further oxides may be present in the glass in an amount of less than 1%, preferably less than 0.1%, and more preferably 0.01% by weight.

In a particular embodiment $MgO$ may be present in the glass at a maximum amount of 0.5% by weight, preferably in an amount of 0-0.2% by weight.

In a particular embodiment $Al_2O_3$ may be present in the glass at a maximum amount of 1% by weight.

In one preferred embodiment the of the invention does not contain ions such as Ce, W, Bi, Mo or Nb or contains said ions only as an impurity or contaminant, i.e. in an amount of less than 1%, preferably less than 0.1%, and more preferably 0.01% by weight.

Manufacture of the glass

The glass of the invention may be prepared from a melt process.

The process comprises the steps of:

a) mixing compounds capable of forming upon melting one or more of $P_2O_5$, $Na_2O$, $CaO$, $B_2O_3$, $ZnO$, $Ag_2O$,

b) melting the starting materials mixture until they are in liquid form at temperatures between 700 and 1000 °C,

c) cooling down the melt until it solidifies.

a) Mixing step

The step of mixing the compound gives a "mixture of the starting materials or compounds".

The compounds capable of forming upon melting one or more of $P_2O_5$, $Na_2O$, $CaO$, $B_2O_3$, $ZnO$, $Ag_2O$ are also called herein "starting materials" or "starting compounds". A starting material can generate upon heating more than one of the oxide components of the glass. For example, a sodium phosphate may be used as starting material to generate $Na_2O$ and $P_2O_5$. In a preferred embodiment the starting materials are in particulate form, preferably about 0.01 micrometre to about 50 micrometre in size, and are intimately mixed together. The starting materials are compounds that form oxides upon melting or heat treatment. These can include oxides, (e.g. $P_2O_5$, $ZnO$, alkaline oxides and alkaline earth oxides), hydroxides, acids ($H_3BO_3$, $HPO_4$), carbonates, chlorides, nitrates, carboxylates, sulfates, alkoxides and the like, or combinations of them. Moreover, starting materials providing more than one oxide can also be used. In one embodiment, in order to provide $Na_2O$ and $P_2O_5$, a sodium phosphate is used. The sodium phosphate is selected from the group consisting of sodium metaphosphate, monosodium orthophosphate, disodium diphosphate, polyphosphates and hydrates thereof, preferably sodium polymetaphosphates and more preferably sodium hexametaphosphate, and mixtures thereof. The skilled person in the art knows the amount needed of the sodium phosphate in order to obtain the above mentioned specified ranges of $Na_2O$ and $P_2O_5$ in the final glass. In a preferred embodiment of the present invention the starting materials are sodium hexametaphosphate, calcium oxide, boric acid, zinc oxide and silver oxide. In another embodiment, titanium oxide is also a starting material. In another embodiment, aluminium oxide is also a starting material. In a preferred embodiment the starting materials are mixed using a ribbon blender. In another embodiment the starting materials are mixed using a cylindrical mixer that has internal blades.

In one embodiment the compound capable of forming the total amount of $P_2O_5$ and $Na_2O$ in the glass is a sodium phosphate, preferably sodium polymetaphosphate, more preferably sodium hexametaphosphate. In a preferred embodiment, the starting material mixture comprises 64.3-92.86% by weight of sodium hexametaphosphate.

In one embodiment the compounds capable of forming CaO, $B_2O_3$, ZnO and $Ag_2O$ are respectively calcium oxide, boric acid, zinc oxide and silver oxide.

In a more preferred embodiment the mixture of the starting materials comprises: 64.3-92.86% by weight of sodium hexametaphosphate, 3-25% by weight of CaO, 1.8-7.1% by weight of boric acid, 2-10 % by weight of ZnO, and0.5-3.0% by weight of $Ag_2O$.

In another aspect refers to the use of the previous mixture of starting material for obtaining a glass, particularly for obtaining the glass of the present invention.

b) Melting step

In a preferred embodiment the melting process takes place at a temperature less than about 1000 °C, and preferably less than about 990 °C. In another embodiment the melting process takes place at a temperature between 700 and 1000°C, preferably between 800 and 990°C, more preferably between 850 and 980 °C. In a particular embodiment the melting process takes place at about 950 °C. The mixture may be melted in a smelter, gas-fired or electrical furnace until all the starting materials are in liquid form. In one embodiment the melting process runs for 10 minutes-5 hours, preferably 3-4 hours, during the time required to fulfil the total fusion of the mixture.

c) Cooling step

The liquid batch is cooled until it solidifies. In one embodiment the liquid is poured into a metallic cast, to be quenched in air. In a preferred embodiment is cooled in a calender (two roll mills). In another embodiment cooling is done by pouring the melt in the air over a mould of refractory steel.

In a further step the solid glass obtained has to be crushed. In one embodiment is crashed into 3-4 mm thickness. In one embodiment, the solid glass is dry-crushed in a jaw crusher.

In a further step the material is grinded, preferably using a hammer mill.

In a preferred embodiment the final antibacterial property imparting glass of the invention presents a homogeneous size distribution of 0.5-60 $\mu$m, preferably $d_{50} \leq$ 18 $\mu$m, wherein $d_{50}$ is the median diameter or medium value of particle diameter. In one particular embodiment, the average particle diameter is around 0.5-10 $\mu$m. In one particular embodiment, the average particle diameter is about 11-20 $\mu$m, or about 21-30 $\mu$m, or about 31-40 $\mu$m, or about 41-50 $\mu$m.

In a preferred embodiment, the glass exhibit a very low glass transition temperature ($T_g$), about 300-600 °C, more preferably about 300-500 °C, and more preferably between 300-400 °C. In a particular embodiment the glass transition temperature ($T_g$) is about 377$\pm$10°C.

In one aspect the invention also relates to an antibacterial property imparting glass comprising:

45-65 % by weight of $P_2O_5$,

19-28 % by weight of $Na_2O$,

3-25% by weight of CaO,

1-4 % by weight of $B_2O_3$,

2-10 % by weight of ZnO, and

0.5-3.0% by weight of $Ag_2O$;

obtained by a process comprising the steps of:

a) mixing compounds capable of forming upon melting one or more of $P_2O_5$, $Na_2O$, CaO, $B_2O_3$, ZnO, $Ag_2O$,

b) melting the compound mixture of step a) until the mixture is in liquid form at temperatures between 700 and 1000 °C, and

c) cooling down the melt until it solidifies.

Manufacture of finished products

The antibacterial property imparting glass in particle form is melt compounded or mixed with a subject material to which antibacterial property should be imparted such as a resin polymer, plastic, paint, latex material and the like. In this case, an average particle diameter can be 0.5-60 $\mu$m, preferably $d_{50} \leq 18$ $\mu$m. When an average particle diameter is less than 0.5 $\mu$m, it becomes difficult to prepare and, when melt compounded or mixed with a subject material to which antibacterial property should be imparted, deviation is produced and compounding or mixing cannot be uniformly performed in some cases. Therefore, antibacterial property imparting effect is lowered and performance of a subject material to which antibacterial property should be imparted (antibacterial product as a result of compounding or mixing) is reduced, in particular, in the deviation area. In addition, when an average particle diameter exceeds 60 $\mu$m, the properties of a subject material to which antibacterial property should be imparted are reduced and appearances of a subject material to which antibacterial property should be imparted (antibacterial product) are deteriorated in some cases. In one particular embodiment, the average particle diameter is around 0.5-10 $\mu$m, or about 11-20 $\mu$m, or about 21-30 $\mu$m, or about 31-40 $\mu$m, or about 41-50 $\mu$m. In a preferred embodiment the average particle diameter is about 11-20 $\mu$m.

Next, an antibacterial glass of the present invention is characterized in that is incorporated in a resin, polymer, plastic, paint or latex material substrate or the like and/or fixed to the surface of the substrate. The antibacterial glass may be incorporated into the finished product at up to 5.0% by weight, at least 0.1% for bulk plastics, at least 0.1% for paper, at least 0.1% for paint.

When the glasses described here are mixed with high-melt temperature polymers they can ensure a partial or complete fusion of the glasses, as the glasses melt at relatively low temperatures, so that the glasses form a more intimate connection to the polymer, which can lead all the way to an extremely homogeneous distribution in the polymer.

Such the antibacterial polymer composite material can be molded into the predetermined shape to obtain a molded antibacterial polymer composite material. In this case, the molded product can be constituted as a final molded product or a transient molded product (so called masterbatch) which is used for softening and remolding into the predetermined secondary shape.

In addition, the aforementioned polymer material substrate is not particularly limited, but is preferably a substrate comprising a thermoplastic or thermoset polymer, such as polypropylene, polyethylene, acrylonitrile-butadiene-styrene terpolymer, polyamide, polyester and the like.

Therefore, the finished product may be a plastic including films, sheets, slabs and molded plastic parts. Non-limitative examples of finished-products that may contain plastics comprising the antibacterial glass of the invention are automobile parts, shower curtains, mats, protective covers, tape, waste containers, brush handles, mops, vacuum cleaner bags, plumbing supplies and fixtures (including toilet bowl seats), drain pan liners, office equipment and supplies (including binders, filing and storage systems, pens, pencils, markers, printers, facsimile machines, photocopiers, desk accessories, computers, keyboards, mice, scanners, and printers), exercise equipment, sports equipment, gaskets, general purpose containers, tubing, liners, non-woven fabrics, siding for housing, bathroom hardware, flooring, floor coverings, footwear (including boots, sports equipment and tools), insulation for wire and cable, insulators, indoor and outdoor furniture, spas, bathtubs, showers and filters and components, telephones, mobile devices, head phones, headsets and accessories, cameras and imaging equipment, televisions and remote controls.

In another embodiment the finished product may be coatings, films and laminates, such as walls, wallboard, floors, fences, rails, concrete, siding, roofing, shingles, industrial equipment, furniture, arm rests and back rests, bed frames, tables, shelving systems, storage systems, automotive and vehicular parts, packaging, paper products (including wall coverings, towels, book covers), barrier fabrics, glazing for cement tile, glazing for vitreous china used in plumbing fixtures (including toilets, sinks), spas, bathtubs, showers, and filters and components thereof.

In another embodiment the finished product may be adhesives or sealants, such as, adhesives used in the manufacture of wood and plastic composites, adhesives for ceramic tile, wood, paper, cardboard, rubber and plastic, glazing for windows, grout, sealants for pipes, adhesives, sealants and insulating materials for appliances, bathrooms, showers, kitchens and construction, plumbing adhesives, grout and joint compound for countertops, building materials and components.

In another embodiment the finished product may be substances used in food-contact articles.

## EXAMPLES

### Example 1. Procedure for obtaining the glasses

The glasses described herein have been prepared from a melt process.

The following starting materials: sodium hexametaphosphate, calcium oxide, boric acid, zinc oxide and silver oxide, were mixed using a ribbon blender (stainless steel AISI 304 or 316, volume = 500 kg, rotational movement at a constant rate of 100 rpm, during 10 minutes). The mixture was sieved to 200 $\mu$m to remove agglomerates. The mixed material was melted in a smelter at 950 °C for 4 hours (Volume= 100 kg/h. Smelter capacity: 300-400 kg). The liquid batch was cooled in a calender and then cut into small crystals using a crusher (3-4 mm). The small crystals were grinded using a hammer mill at a rate of 100 kg/h. Large particles were isolated in the cyclone ($d_{50} \leq 18$ $\mu$m).

The following glasses, glass 1 and glass 2, belonging to the present invention were obtained following the above process:

| | Glass1 |
|---|---|
| $P_2O_5$ | 54.7% |
| $Ag_2O$ | 1.36% |
| $B_2O_3$ | 2.9% |
| CaO | 7.8% |
| $Na_2O$ | 25.0% |
| $TiO_2$ | 0.08 % |
| ZnO | 6.1% |
| Impurities | 2.06% |

The impurities detected in Glass 1 were $Al_2O_3$, MgO, $SiO_2$, $Fe_2O_3$, $K_2O$, $ZrO_2$, PbO, $HfO_2$, SrO and MnO.

| | Glass 2 |
|---|---|
| $P_2O_5$ | 56.2 % |
| $Ag_2O$ | 1.43 % |
| $B_2O_3$ | 2.9 % |
| CaO | 7.0 % |
| $Na_2O$ | 24.6 % |
| $TiO_2$ | 3.1 % |
| ZnO | 2.6 % |
| Impurities | 2.17 % |

The impurities detected in Glass 2 were MgO, $SiO_2$, $Al_2O_3$, $Fe_2O_3$, $K_2O$, $ZrO_2$, PbO, $HfO_2$, SrO and MnO.

### Comparative Samples

Available commercial antimicrobial glasses "Comparative Example 1" and "Comparative Example 2" were analysed.

### Comparative Example 1.

| | |
|---|---|
| $P_2O_5$ | 72.1% |
| MgO | 22.5% |
| $Ag_2O$ | 2.8% |
| CaO | 0.21% |
| $Na_2O$ | 2.1% |
| $TiO_2$ | 0.01% |
| ZnO | <0.01% |

(continued)

| Impurities | 0.27 % |
|---|---|

The impurities detected in Comparative Glass sample 1 were $SiO_2$, $Al_2O_3$, $Fe_2O_3$, $K_2O$, $ZrO_2$, PbO, $HfO_2$, SrO and MnO.

**Comparative Example 2.**

| | |
|---|---|
| $P_2O_5$ | 69.6% |
| MgO | 19.1% |
| $Ag_2O$ | 2.9% |
| $Al_2O_3$ | 7.9% |
| CaO | 0.18% |
| $Na_2O$ | 0.03% |
| $TiO_2$ | 0.01% |
| Impurities | 0.29% |

The impurities detected in Comparative Glass sample 2 were $SiO_2$, $Fe_2O_3$, $K_2O$, $ZrO_2$, PbO, ZnO, $HfO_2$, SrO and MnO.

**Example 2.Antimicrobial properties**

This example shows the antimicrobial capacity of the glasses of the invention and compares it to other commercial grades of silver-based antimicrobial phosphate glasses when incorporated in polystyrene (PS) films.

Test substances

A summary of the products tested and its corresponding % of silver is indicated in the following table:

| Sample | Silver concentration in the PS sample (ppm) |
|---|---|
| PS Control sample without additive | - |
| PS + 0.5% Glass 1 | 65 |
| PS + 0.5% Glass 2 | 65 |
| PS + 0.24% Comparative Ex 2 | 65 |
| PS + 0.25% Comparative Ex 1 | 65 |

Following experimental methodology is well described and used in the industry for the evaluation of the antimicrobial properties of non-porous surfaces:

3.1.- Bacterial strain and growth conditions

For the present test *Escherichia coli* (CECT 516, ATCC 8739) and *S.aureus* (CECT 86, ATCC 12600) obtained from the Spanish Type Culture Collection, Valencia, Spain, were used. The strain was stored in Tryptone Soy Broth (TSB) with 20% glycerol at - 80°C until needed. For experimental use, the stock culture was maintained by regular subculture on agar Tryptone Soy Agar (TSA) slants at 4°C and transferred monthly. A loopful of bacteria was removed to 10 mL of TSB and was incubated at 37°C overnight. A 100 $\mu$l aliquot from the overnight culture was again transferred to TSB and grown at 37°C to the stationary phase of growth. This culture served as the inoculum in the susceptibility study, starting with approximately $10^5$ CFU/mL on each test non-porous sample.

3.2.- Susceptibility tests

To evaluate the effectiveness of the samples indicated in the table, bacterial growth was evaluated according to International standard protocol for antimicrobial surfaces ISO 22196:2007 ("Plastics - Measurement of antibacterial activity on plastics surfaces). For this method, each sample (5x5 cm) was inoculated with ca. $1*10^5$ CFU (colony forming units) and incubated at 37°C, 100% RH for 24 hours. Then, a 0.1 mL aliquot from each tube was sub-cultivated on TSA plates. Finally, plates were read after overnight incubation at 37°C.

Each specimen was tested in triplicate. The results were expressed as final CFU/mL and compared with a control sample without additive. The value of antimicrobial activity of the samples tested by the Standard ISO 22196:2007 was determined through the following formula:

$$R= Ut - At$$

where "$Ut$" is the average of the common logarithm of the number of viable bacteria recovered from the untreated test specimens after 24 h and "$At$" is the average of the common logarithm of the number of viable bacteria, recovered from the treated test specimens after 24 h. The value of the antibacterial activity can be used to characterize the effectiveness of an antibacterial agent. The antibacterial-activity values used to define the effectiveness shall be agreed upon by all interested parties.

4. - Results and discussion

Tables 1 and 2 show the final microbial counts of *S.aureus* and *E.coli* and the R values obtained both in the control samples (without additive) and in the samples in which the additives were incorporated. Also, Figures 3 and 4 show the final microbial counts after the incubation period for these microorganisms.

Table 1.Final bacterial counts of *S.aureus* after 24 h of incubation at 37°C and R values.

| Sample | Log CFU/mL | Log CFU/mL | Log CFU/mL | Mean | R | % Reduction |
|---|---|---|---|---|---|---|
| PS Control sample without additive | 6.78 | 6.75 | 6.64 | 6.72 | - | - |
| PS + 0,5% Glass 1 | 1.00 | 1.00 | 1.00 | 1.00 | 5.72 | 100.00 |
| PS + 0,5% Glass 2 | 3.64 | 4.04 | 2.75 | 3.48 | 3.25 | 99.90 |
| PS + 0,24% comparative sample 1 | 6.60 | 5.87 | 5.52 | 6.00 | 0.73 | 68.29 |
| PS + 0,25% comparative sample 2 | 5.94 | 5.92 | 6.04 | 5.97 | 0.76 | 82.46 |

Table 2.Final bacterial counts of *E.coli* after 24 h of incubation at 37°C and R values.

| Sample | Log CFU/mL | Log CFU/mL | Log CFU/mL | Mean | R | % Reduction |
|---|---|---|---|---|---|---|
| PS Control sample without additive | 7.15 | 7.27 | 7.19 | 7.20 | - | - |
| PS + 0,5% Glass 1 | 3.06 | 3.16 | 2.90 | 3.04 | 4.16 | 99.99 |
| PS + 0,5% Glass 2 | 5.87 | 6.00 | 5.60 | 5.82 | 1.38 | 95.58 |
| PS + 0,24% comparative sample 1 | 7.00 | 6.78 | 6.86 | 6.88 | 0.32 | 51.99 |
| PS + 0,25% comparative sample 2 | 7.06 | 6.96 | 7.09 | 7.04 | 0.16 | 31.06 |

From the obtained results, it is observed that the PS films with the glass of the invention corresponding to the glasses 1 and 2 led to a significant reduction of the final viable microbial cells (>95% of bacterial reduction). On the other hand, the PS samples in which the comparative samples 1 and 2 were incorporated did not show significant antimicrobial properties in any case (microbial reductions lower than 90%).

**Example 3. Evaluation of the solubility of Glass I and Comparative Sample 2**

In order to carry out the kinetic study 0.5 g of every sample and 30 mL of pure water were mixed and maintained at 25 °C in a thermostatic bath. Extractions were carried out at 0.5, 1, 2 and 3 hours and the liquid fraction was isolated by means of vacuum filtration with a filter of 0.45 $\mu$m pore size. In the isolated liquid fraction the Ag, Mg, Zn, Ca and Na concentrations were determined by atomic absorption spectrophotometry using a Perkin Elmer spectrophotometer model Analyst 400, and the P, Al and B concentration by inductively coupled plasma optical emission spectrometry (ICP-OES) using a Leeman Labs spectrometer model Direct Reading Echelle. The validation of the measurements was carried out, firstly, performing the tests in duplicate, and secondly, measuring reference materials of known concentration.

Table 3. Cumulative release of elements as a function of time

| Element | Sample | Time (h) | | | |
|---|---|---|---|---|---|
| | | 0,5 | 1 | 2 | 3 |
| **Ag (ppm)** | Glass 1 | 10.8 | 11.4 | 12.5 | 12.7 |
| | Comp. sample 2 | 2.5 | 3.3 | 5.5 | 10 |
| Mg (ppm) | Glass 1 | - | - | - | - |
| | Comp. sample 2 | 24 | 30 | 43 | 68 |
| **P (ppm)** | Glass 1 | 435 | 475 | 504 | 560 |
| | Comp. sample 2 | 57 | 71 | 101 | 116 |
| Al (ppm) | Glass 1 | - | - | - | - |
| | Comp. sample 2 | 8 | 9.6 | 13 | 15 |
| Zn (ppm) | Glass 1 | 56 | 63 | 68 | 73 |
| | Comp. sample 2 | - | - | - | - |
| Ca (ppm) | Glass 1 | 110 | 116 | 124 | 129 |
| | Comp. sample 2 | - | - | - | - |
| Na (ppm) | Glass 1 | 408 | 435 | 460 | 490 |
| | Comp. sample 2 | - | - | - | - |
| B (ppm) | Glass 1 | 14 | 15 | 16 | 18 |
| | Comp. sample 2 | - | - | - | - |

As observed in Table3, the common elements Ag and P are released at a higher rate in the case of Glass I from the beginning of the test, corroborating the antimicrobial results obtained in the susceptibility tests.

**Example 4. Evaluation of the chemical state of silver**

X-ray photoelectron spectroscopy (XPS) makes possible to measure the electrons emitted in an interval of energy according to the binding energy of the electrons. Each chemical element is characterized by a single spectrum. This spectroscopic method makes it possible to precisely analyse the chemical nature of a given material. A semiquantitative analysis can be also extracted from normalized XPS spectra while being based on the height of the peaks and surface under the peaks. In addition, the identification of the chemical state of an element can be obtained starting from the exact measurement of the position of the peaks and their separations in energy.

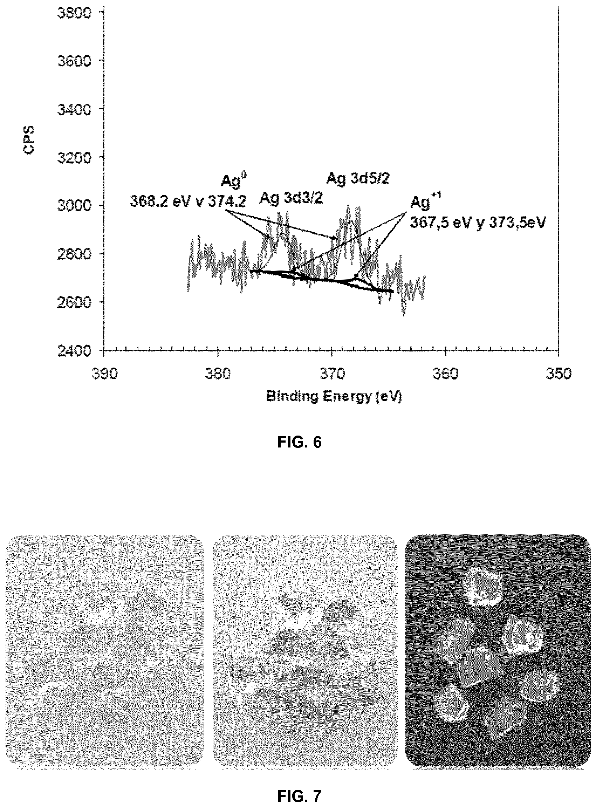

The samples Glass I and Comparative Ex 2 were evaluated according to this method (see Figures 5 and 6, respectively) and the percentage of Ag° and Ag$^+$ per total amount of silver in the sample was estimated (see Table 4).

Table 4. Estimation of the chemical state of silver by XPS (% per total amount of silver)

| | % Chemical State of silver/total amount of silver* | |
|---|---|---|
| Element | Glass 1 | Comparative Ex 2 |
| Ag$^0$ | 60.3 | 83.4 |
| Ag$^+$ | 39.7 | 16.6 |
| *Each sample was tested in triplicate | | |

As observed in Table 4, the sample Glass 1 presents approximately 40% of ionic silver, while Comparative Ex 2 mainly contains metallic silver. It is widely known that the antimicrobial action of silver or silver compounds is proportional to the bioactive silver ion (Ag+) released and its availability to interact with bacterial or fungal cell membranes. In this sense, metallic silver has no antimicrobial properties. It is only until the metallic silver ionizes in the presence of water, body fluids or tissue exudates that it reaches the level 1+ oxidation state (i.e. $Ag^+$) that it is sufficiently able to be a relevant biocide. For that reason, sample Glass 1 presents better antimicrobial properties during the susceptibility test than the sample Comparative Ex 2. This demonstrated effect is most probably due to the capacity of Glass 1 to act as a strong antimicrobial system from time zero since it contains enough available silver ions and does not require a previous ionization step.

### Example 5. Stability test

The effect of the addition of $TiO_2$ was demonstrated through the irradiation of the samples over time (UV lamp, OSRAM ULTRA-VITALUX 300W). The irradiation was performed directly on the glass powder corresponding to Glass 1 and Glass 2. The following Table (Table 5) shows a high improvement of the stability of the Glass 2.

Table 5. $\Delta E$ obtained for glass 1 glass 2 and comparative sample (direct UV light on the powder glass) over time

| Sample | $\Delta E$ (24 hours) | $\Delta E$ (48 hours) | $\Delta E$ (72 hours) | $\Delta E$ (96 hours) | $\Delta E$ (168 hours) |
|---|---|---|---|---|---|
| Glass 1 | 1.29 | 3,3 | 5.04 | 5.97 | 7.96 |
| Glass 2 | 1.63 | 1.79 | 2.00 | 2.38 | 2.69 |

### Comparative Example 6.

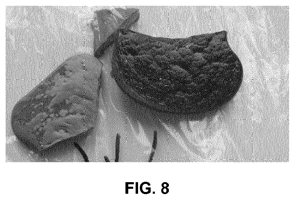

The inventors tried to obtain comparative sample 2 glass according to the process of example 1 (950 °C) but the mixture of starting materials did not melt. They had to rise the temperature to 1380 °C. The glass obtained is shown in figure 8 and as can be seen is far to be transparent and homogeneous, as the glass obtained in the present invention, shown in figure 7.

### Claims

1.   A glass comprising:

45-65% by weight of $P_2O_5$,
19-28 % by weight of $Na_2O$,
3-25% by weight of CaO,
1-4 % by weight of $B_2O_3$,
2-10 % by weight of ZnO, and
0.5-3.0% by weight of $Ag_2O$.

2.   The glass according to claim 1, comprising 0-2% by weight of $Al_2O_3$.

3.   The glass according to any one of claims 1 or 2, comprising 0-5% by weight of $TiO_2$.

4.   A process for manufacturing a glass as defined in any of claims 1-3 comprising the steps of:

a) mixing compounds capable of forming upon melting one or more of $P_2O_5$, $Na_2O$, CaO, $B_2O_3$, ZnO, $Ag_2O$,
b) melting the compound mixture of step a) until the mixture is in liquid form at temperatures between 700 and 1000 °C, and
c) cooling down the melt until it solidifies.

5.   The process according to claim 4 wherein the compound capable of forming $P_2O_5$ and $Na_2O$ is a sodium phosphate.

6.   The process according to claim 5 wherein the sodium phosphate is sodium hexametaphosphate.

7.   The process according to claim 4 wherein the compounds capable of forming CaO, $B_2O_3$, ZnO, $Ag_2O$ are respectively

calcium oxide, boric acid, zinc oxide and silver oxide.

8. The process according to any of claims 6 or 7 wherein the mixture of the compounds in step a) comprises 64.3-92.9% by weight of sodium hexametaphosphate.

9. The process according to any of claims 4 to 8 wherein in step a) $Al_2O_3$ and $TiO_2$ are respectively further compounds capable of forming upon melting $Al_2O_3$ and $TiO_2$.

10. The process according to any of claims 4 to 9 wherein the melting step takes place at a temperature between 800 and 990 °C.

11. The process according to any of claims 4 to 10 wherein there is a further crushing and/or grinding step.

12. The process according to any of claims 4 to 11 wherein an antibacterial property imparting glass having a final size distribution of 0.5-60 $\mu$m is obtained.

13. Use of the glass defined in any of claims 1-3 as antibacterial property imparting glass.

14. Use of the antibacterial property imparting glass as defined in any of claims 1-3 in the manufacture of an antibacterial resin, polymer, plastic, paint or latex material.

15. A polymer, plastic, paint or latex material comprising the glass as defined in claims 1-3.


**Patentansprüche**

1. Glas, umfassend:

   45-65 Gew.-% $P_2O_5$,
   19-28 Gew.-% $Na_2O$,
   3-25 Gew.-% CaO,
   1-4 Gew.-% $B_2O_3$,
   2-10 Gew.-% ZnO und
   0,5-3,0 Gew.-% $Ag_2O$.

2. Glas gemäß Anspruch 1, umfassend 0-2 Gew.-% $Al_2O_3$.

3. Glas gemäß einem der Ansprüche 1 oder 2, umfassend 0-5 Gew.-% $TiO_2$.

4. Verfahren zur Herstellung eines Glases gemäß einem der Ansprüche 1 bis 3, umfassend die Schritte:

   a) Mischen von Verbindungen, die beim Schmelzen eines oder mehrere von $P_2O_5$, $Na_2O$, CaO, $B_2O_3$, ZnO, $Ag_2O$ bilden können;
   b) Schmelzen des Verbindungsgemischs von Schritt a), bis das Gemisch in flüssiger Form vorliegt, bei Temperaturen zwischen 700 und 1000 °C; und
   c) Abkühlen der Schmelze, bis sie erstarrt.

5. Verfahren gemäß Anspruch 4, wobei die Verbindung, die $P_2O_5$ und $Na_2O$ bilden kann, ein Natriumphosphat ist.

6. Verfahren gemäß Anspruch 5, wobei es sich bei dem Natriumphosphat um Natriumhexametaphosphat handelt.

7. Verfahren gemäß Anspruch 4, wobei es sich bei den Verbindungen, die CaO, $B_2O_3$, ZnO, $Ag_2O$ bilden können, um Calciumoxid, Borsäure, Zinkoxid bzw. Silberoxid handelt.

8. Verfahren gemäß einem der Ansprüche 6 oder 7, wobei das Gemisch der Verbindungen in Schritt a) 64,3 bis 92,9 Gew.-% Natriumhexametaphosphat umfasst.

9. Verfahren gemäß einem der Ansprüche 4 bis 8, wobei in Schritt a) $Al_2O_3$ und $TiO_2$ weitere Verbindungen sind, die

beim Schmelzen Al$_2$O$_3$ bzw. TiO$_2$ bilden können.

10. Verfahren gemäß einem der Ansprüche 4 bis 9, wobei der Schritt des Schmelzens bei einer Temperatur zwischen 800 und 990 °C stattfindet.

11. Verfahren gemäß einem der Ansprüche 4 bis 10, wobei es einen weiteren Zerkleinerungs- und/oder Mahlschritt gibt.

12. Verfahren gemäß einem der Ansprüche 4 bis 11, wobei ein antibakterielle Eigenschaften verleihendes Glas mit einer endgültigen Größenverteilung von 0,5 bis 60 $\mu$m erhalten wird.

13. Verwendung des in einem der Ansprüche 1 bis 3 definierten Glases als antibakterielle Eigenschaften verleihendes Glas.

14. Verwendung des antibakterielle Eigenschaften verleihenden Glases, wie es in einem der Ansprüche 1 bis 3 definiert ist, bei der Herstellung eines antibakteriellen Harzes, Polymers, Kunststoffs, Lacks oder Latexmaterials.

15. Polymer, Kunststoff, Lack oder Latexmaterial, umfassend das Glas, wie es in den Ansprüchen 1 bis 3 definiert ist.

**Revendications**

1. Un verre comprenant :

   45 à 65 % en poids de P$_2$O$_5$,
   19à 28 % en poids de Na$_2$O,
   3 à 25 % en poids de CaO,
   1 à 4 % en poids de B$_2$O$_3$,
   2 à 10 % en poids de ZnO, et
   0,5 à 3,0 % en poids de Ag$_2$O.

2. Le verre selon la revendication 1, comprenant 0 à 2 % en poids d'Al$_2$O$_3$.

3. Le verre selon l'une quelconque des revendications 1 ou 2, comprenant de 0 à 5 % en poids de TiO$_2$.

4. Un procédé de fabrication d'un verre tel que défini dans l'une quelconque des revendications 1 à 3 comprenant les étapes consistant à :

   a) mélanger des composés aptes à former, lorsqu'ils sont fusionnés un ou plusieurs parmi P$_2$O$_5$, Na$_2$O, CaO, B$_2$O$_3$, ZnO, Ag$_2$O,
   b) faire fondre le mélange composé de l'étape a) jusqu'à ce que le mélange soit sous forme liquide à des températures comprises entre 700 et 1000°C, et
   c) refroidir la masse fondue jusqu'à ce qu'elle se solidifie.

5. Le procédé selon la revendication 4, dans lequel le composé apte à former P$_2$O$_5$ et Na$_2$O est un phosphate de sodium.

6. Le procédé selon la revendication 5, dans lequel le phosphate de sodium est l'hexamétaphosphate de sodium.

7. Le procédé selon la revendication 4, dans lequel les composés aptes à former CaO, B$_2$O$_3$, ZnO, Ag$_2$O sont respectivement l'oxyde de calcium, l'acide borique, l'oxyde de zinc et l'oxyde d'argent.

8. Le procédé selon l'une quelconque des revendications 6 ou 7, dans lequel le mélange des composés de l'étape a) comprend de 64,3 à 92,9 % en poids d'hexamétaphosphate de sodium.

9. Le procédé selon l'une quelconque des revendications 4 à 8, dans lequel dans l'étape a) Al$_2$O$_3$ et TiO$_2$ sont respectivement d'autres composés aptes, lorsqu'ils sont fusionnés, à former Al$_2$O$_3$ et TiO$_2$.

10. Le procédé selon l'une quelconque des revendications 4 à 9, dans lequel l'étape de fusion a lieu à une température comprise entre 800 et 990°C.

**11.** Le procédé selon l'une quelconque des revendications 4 à 10, dans lequel il y a une étape supplémentaire de concassage et/ou de broyage.

**12.** Le procédé selon l'une quelconque des revendications 4 à 11, dans lequel il est obtenu un verre qui confère une propriété antibactérienne ayant une distribution de taille finale de 0,5 à 60 μm.

**13.** Utilisation du verre défini dans l'une quelconque des revendications 1 à 3 en tant que verre qui confère une propriété antibactérienne.

**14.** Utilisation du verre qui confère une propriété antibactérienne tel que défini dans l'une quelconque des revendications 1 à 3 dans la fabrication d'un matériau antibactérien en résine, polymère, plastique, sous forme de peinture ou en latex.

**15.** Un matériau polymère, plastique, sous forme de peinture ou en latex comprenant le verre tel que défini dans les revendications 1 à 3.

FIG. 1

**FIG. 2**

**FIG. 3**

**FIG. 4**

**FIG. 5**

FIG. 6

FIG. 7

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8026955 A
- JP 60178810 A
- JP 2000247822 A
- JP 4270208 A
- EP 1452496 A

- JP 5155733 A
- EP 1452496 B1
- US 20050233888 A
- EP 1116700 A1
- WO 03082358 A